# EUROPEAN PATENT APPLICATION

(11) **EP 1 688 457 A1**
(43) Date of publication of application: **09.08.2006**
(21) Application number: 05256943.1
(22) Date of filing: 09.11.2005
(51) Int. Cl.: C08K 9/06, C09D 5/24

(54) **Surface treatment of metallic fillers for organic resins**

(30) Priority: 11.01.2005 US 32922
(71) Applicant: Northorp Grumman Corporation, Los Angeles, CA 90067-2199 (US)
(72) Inventor: McLaughlin, Joanne S., Seal Beach, California 90740 (US); Weir, John D., Huntington, New York 11743 (US); Willis, John, Seal Beach, California 90740 (US); Low, Madeleine, Los Angeles, California 90034 (US)
(74) Representative: Pitchford, James Edward

(57) **Abstract**

A method is provided for pretreating metallic fillers adapted to be added into an organic polymer resin matrix adapted to cure into a material, wherein pretreating the fillers enhances the mechanical and electrical properties of the cured material. The method includes selecting an organofunctional silane based on compatibility of a functional organic with a selected polymer; determining an amount of silane required for treatment of the fillers by calculating the amount of silane required to provide monomolecular coverage of the particle surfaces of the filler based on a specific surface area measurement of the particle surfaces; uniformly dispersing the required amount of silane over the filler; allowing adequate time for the silane to react with particle surfaces of the filler; and mixing the treated filler into the polymer resin.

## Description

### CROSS-REFERENCE TO RELATED APPLICATIONS

Not Applicable

### STATEMENT RE: FEDERALLY SPONSORED RESEARCH/DEVELOPMENT

Not Applicable

### BACKGROUND OF THE INVENTION

### 1. Field of the Invention

The present invention relates to filled resins commonly used in aircraft design to control or direct the propagation of electromagnetic energy. And more particular, the present invention relates to methods of treating metallic fillers that are added to an organic resin matrix in order to achieve specific electrical and mechanical properties within the cured material that remain stable upon extended exposure to severe environmental conditions.

### 2. Background of the Invention

Filled resins are commonly used in aircraft design to control or direct the propagation of electromagnetic energy. Examples of filled resins include materials such as coatings used to absorb electromagnetic energy, conductive coatings and sealants, dielectric coatings and anti-static coatings. Typically, to achieve specific electrical properties, the resin is highly loaded with fillers, or combinations of fillers, such as silver, nickel, iron or various other metals.

Although filled resin manufacturing processes are expanding the aerospace technology envelope, filled resin technology still has disadvantages than can be improved upon. Because these resin materials are highly loaded with fillers, it is difficult to retain the mechanical properties that the resins where designed to provide while achieving the required electrical properties. Furthermore, these highly filled materials are required to maintain their mechanical and electrical integrity over a wide range of operating conditions where varying temperatures and strain levels often cause degradation and premature failure.

It has been observed that in many cases in which degradation and/or premature failure occurs in aerospace applications using filled resins, that such failure was attributable to moisture present on the surface of the filler particles when the filler particles were mixed in with the resin. In the past, in preparation of these types of materials, metallic fillers were usually directly incorporated into the resin system without pretreatment.

It would be advantageous and beneficial to provide a filler pretreatment step that will remove moisture and/or any contaminants from the filler before it is mixed with the resin. By incorporating a filler pretreatment step, prior to mixing the filler into the resin, the particle surface and resin-particle interface can be stabilized. A stabilized particle surface will exhibit better adhesion properties and stable electrical properties at the particle-polymer interface when it is mixed with the resin.

### BRIEF SUMMARY OF THE INVENTION

The present invention is intended to overcome and solve the aforementioned problems that arise when filled resins are used in aircraft design to control or direct the propagation of electromagnetic energy. Furthermore, the present invention provides better performance characteristics than any previously known or published approaches in the field of filled resins.

The present invention provides a method for treatment of metallic fillers that are added to an organic matrix in order to achieve specific electrical and mechanical properties within the cured material that remain stable upon extended exposure to severe environmental conditions. Thus, the disclosed method may be used to additionally enhance adhesion between conductive, non-conductive and semi-conductive particle surfaces and the organic matrix of choice thereby stabilizing the particle-polymer interface.

According to a first exemplary embodiment of the present invention, a method is provided for pretreating metallic fillers adapted to be added into an organic polymer resin matrix which is adapted to cure into a material wherein pretreating the fillers enhances the mechanical and electrical properties of the cured material.

The aforementioned method may include the following steps:
a) Selecting an organofunctional silane based on compatibility of a functional organic with a selected polymer;
b) Determining an amount of silane required for treatment of the filler by calculating the amount of silane required to provide approximately one molecular layer of coverage of the particle surfaces of the filler based on a specific surface area measurement of the particle surfaces;
c) Uniformly dispersing the required amount of silane over the filler;
d) Allowing adequate time for the silane to react with particle surfaces of the filler; and
e) Mixing the treated filler into the polymer resin.

According to another aspect of the present invention, the silane is selected from a group consisting of epoxy and amino functional silanes. According to still another aspect of the present invention, the organic polymer resin is a polyurethane resin. According to yet another aspect of the present invention, the silane is DOW CORNING Z-6040 dispersed in a low moisture content solvent.

According to other aspects of the present invention, the filler may comprise any particulate matter that may be added to an organic polymer in order to enhance or modify resulting electrical properties of the filled material. In yet another aspect of the present invention, the organic polymer resin comprises one of epoxy, polysulfide, fluoroelastomer, polyester, polyurea, polythioether, vinyl ester or polyaspartic.

Furthermore, in another aspect of the present invention, the silane comprises an organofunctional silane having the formula of RnSi(OR)4-n, wherein R is selected from a group consisting of alkyl, allyl and organofunctional, and wherein OR is selected from a group consisting of methoxy, ethoxy and acetoxy, to promote adhesion between an inorganic surface and organic resin.

Other exemplary embodiments and advantages of the present invention may be ascertained by reviewing the present disclosure and the accompanying drawings.

### BRIEF DESCRIPTION OF THE DRAWINGS

The present invention is further described in the detailed description that follows, by reference to the noted drawings by way of non-limiting examples of preferred embodiments of the present invention, in which like reference numerals represent similar parts throughout several views of the drawings, and in which:
Figure 1 provides a first exemplary method for the treatment of metallic fillers for organic resins, according to an aspect of the present invention;
Figure 2 provides a bar graph comparing the tensile strength of a filled elastomer using treated filler to the tensile strength of a filled elastomer with untreated filler, according to an aspect of the present invention; and
Figure 3 provides a bar graph comparing the elongation properties of a filled elastomer using treated filler to the tensile strength of a filled elastomer with untreated filler, according to an aspect of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

### Overview of the Present Invention

The present invention provides a method for treatment of metallic fillers that are added to an organic matrix in order to achieve specific electrical and mechanical properties within the cured material that remain stable upon extended exposure to severe environmental conditions. According to an aspect of the present invention, the disclosed method is used to enhance adhesion between conductive, non-conductive and semi-conductive particle surfaces and the organic matrix of choice thereby stabilizing the particle-polymer interface.

According to an aspect of the present invention, filler particles are pretreated with an organofunctional silane prior to incorporation into one or more components of a polymer. The silane may be selected based on compatibility of the functional organic with a selected polymer. For example, epoxy or amino functional silanes serve as an excellent pretreatment for metallic fillers to be incorporated into a polyurethane resin.

The pretreatment is performed by uniformly dispersing the required amount of silane over the filler, allowing adequate time for the silane to react with the particle surface and then mixing the treated filler into the resin.

The amount of silane to be used is determined by calculating the quantity of silane required to provide approximately one monomolecular layer coverage of the particle surface based on specific surface area. Pretreatment of the filler in this manner will enhance the mechanical and electrical properties of the cured material by stabilizing the filler surface, stabilizing the filler-polymer interface, consuming excess moisture that may be present on the surface of the filler, promoting uniform dispersion of the resin around the filler particles, promoting uniform dispersion of the particle throughout the resin and enhancing adhesion at the particle-polymer interface.

More specifically, the particle pretreatment process provides a method to accomplish the following: (1) Improve the mechanical and electrical properties of the filled system by enhancing adhesion between the particle surface and the polymer matrix; (2) Improve the long-term durability and flexibility of the cured film by stabilizing the filler-polymer interface, thus, making it less susceptible to mechanical and electrical degradation upon expose to extreme environmental conditions (humidity and thermal cycling); (3) Consume excess moisture in the system by reacting residual moisture present at the particle surface that may otherwise render the cured system more susceptible to degradation; and further, consumption of excess moisture allows for better control of the coating formulation by eliminating the effect of moisture on required stoichiometric ratio of polymer to curing agent; and (4)

Improve dispersion of the filler within the polymer thus resulting in a more uniform particle distribution within the cured film.

### Exemplary Method for the Treatment of Metallic Fillers for Organic Resins

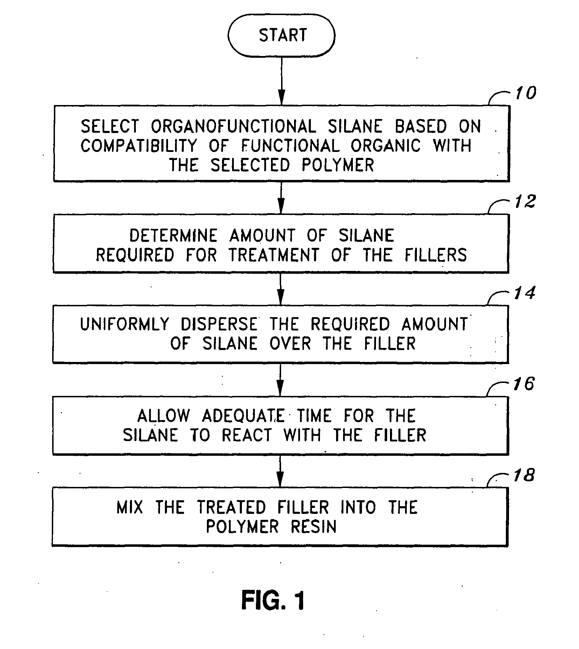

Figure 1 provides an exemplary method for the treatment of metallic fillers for organic resins, according to an aspect of the present invention. In particular, a method is provided for pretreating metallic fillers to be added into an organic polymer resin matrix which cures into a material, wherein pretreating the fillers enhances the mechanical and electrical properties of the cured material.

Referring to Figure 1 which illustrates the exemplary method in a flow diagram, the method is initiated at step 10 by selecting an organofunctional silane based on compatibility of a functional organic with the selected polymer. For example, epoxy or amino functional silanes serve as an excellent pretreatment for metallic filler to be incorporated into a polyurethane resin. Step 12 includes determining a required amount of silane for treatment of the fillers. For example, determining the required amount of silanes may include calculating the quantity of silane required to provide monomolecular coverage of the particle surface based on specific surface area. Step 14 includes uniformly dispersing the required amount of silane over the filler. Step 16 includes allowing adequate time for the silane to react with particle surfaces of the filler. And step 18 includes mixing the treated filler into one or more components of the polymer.

### Example:

An example of the method for the treatment of metallic fillers for organic resins is now discussed herein below. Metallic filler was incorporated into a polyurethane resin to prepare an elastomeric film with specific electrical and mechanical properties. The amount of filler and silane treatment used in this example was calculated based on the desired weight percent of filler in the cured elastomer and the total particle surface area of the filler.

Prior to incorporation into the base resin, the metallic filler was treated with a dilute solution of DOW CORNING Z-6040 dispersed in solvent. Control samples were prepared using the same polyurethane resin and metallic filler without the pretreatment step. 16" x 16" x 0.050" cured sheets were prepared and used for mechanical and electrical testing of the cured film.

Test results were then compared to the control formulation to determine the effect of pretreatment of the metallic powder. Permittivity and permeability were measured to establish electrical properties and mechanical properties (tensile and elongation) were evaluated per ASTM D412. The following delineates the specific procedure that was used for preparation of the experimental and control samples:

### Preparation of Experimental Samples:

The experimental samples were prepared by the following exemplary method:
a) Each batch required 2618 g of dried metallic filler;
b) Filler material was placed in an open container and dried in an oven at 160°F for a minimum of 24 hrs;
c) A solvent mixture containing 3 mls of Z-6040 and 397 mls of low moisture content solvent was prepared;
d) The filler was dispersed into the solvent mixture using a low shear mixer;
e) The filler/solvent mixture was allowed to stand for one hour to give the silane adequate time to react with the metallic filler;
f) 400 g of polyurethane base was measured;
g) The treated filler was incorporated into the polyurethane base using a low shear mixture;
h) A low moisture content solvent was used to reduce the viscosity of the mixture to a sprayable consistency;
i) 74 g of the appropriate curing agent and accelerator was mixed into the filled base and the material was placed on a paint shaker for 20 min; and
j) A 16" x 16" x 0.050" sheet was sprayed and cured.

### Preparation of Control Samples:

The experimental samples were prepared by the following exemplary method:
a) Each batch required 2618 g of dried metallic filler;
b) Filler material was placed in an open container and dried in an oven at 160°F for a minimum of 24 hrs;
c) 400 g of polyurethane base was measured;
d) A low shear mixer was used to incorporate the metallic filler into the base;
e) Low moisture content solvent was used to reduce the viscosity to a mixture to a sprayable consistency;
f) 74 g of the appropriate curing agent and accelerator was mixed into the filled base and the material was placed on a paint shaker for 20 min; and
g) A 16" x 16" x 0.050" sheet was sprayed and cured.

Mechanical properties of the cured film were assessed at various temperature (-65 deg F, room temperature, and 180 deg F) using ASTM D412, Standard Test Methods for Vulcanized Rubber and Thermoplastic Elastomers - Tension. The results of the mechanical testing are now discussed below.

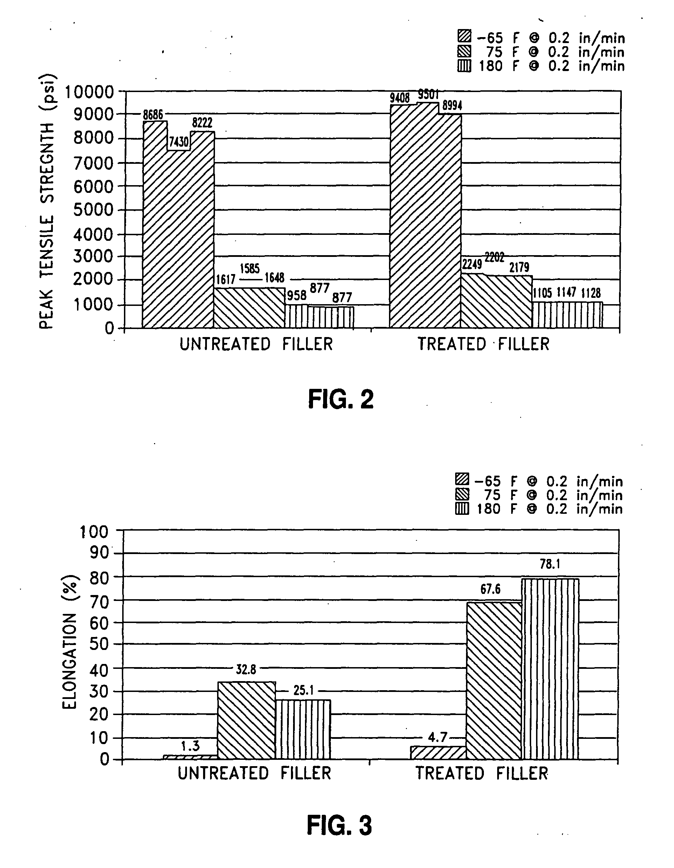

Figure 2 provides a bar graph comparing the tensile strength of a filled elastomer using treated filler to the tensile strength of a filled elastomer using untreated filler, according to an aspect of the present invention. In particular, the tensile strength of cured film at various temperatures is depicted in Figure 2. In all cases, the tensile strength of the material increased when the filler pretreatment process was employed.

Figure 3 provides a bar graph comparing the elongation properties of a filled elastomer at various temperatures (e.g., -65°F, 75°F and 180°F) using treated filler to the tensile strength of a filled elastomer using untreated filler, according to an aspect of the present invention. Once again, in all cases, the average elongation increased with the filler pretreatment process. Of particular significance is the low temperature elongation. Aircraft structures are exposed to a broad range of temperature during flight and the significant increase in elongation achieved at low temperature (approximately 360%) is expected to increase the durability of the material.

Another significant result can be observed by comparing the results of the room temperature and high temperature elongation. With the untreated filler, the average elongation at room temperature was 32.8%. At 180°F, the average elongation dropped to 25.1%. For the material prepared with the treated filler, the average elongation was 67.8% and this increased to 78.1% when tested at 180°F. For the untreated filler, this result indicates that the material is experiencing some degree of post-curing that is degrading the mechanical properties. The degradation is not observed when the filler pretreatment process is used. Further, this characteristic will delay degradation that may occur as a result of temperature cycling.

Electrical properties of the filled elastomer were also tested. The results indicate that the electrical properties were maintained when the pretreatment process was used. Further, it is anticipated that the pretreatment process will further stabilize the electrical performance over an extended period of operation and out perform the control process that does not have surface treatment, particularly upon exposure to severe environmental conditions.

Although the invention has been described with reference to an exemplary embodiment, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and such uses are within the scope of the appended claims.

## Claims

1. A method for pretreating metallic filler adapted to be added into an organic polymer resin matrix adapted to cure into a material, wherein pretreating the fillers enhances the mechanical and electrical properties of the cured material, the method comprising:
a) selecting an organofunctional silane based on compatibility of a functional organic with a selected polymer;
b) determining an amount of silane required for treatment of the filler by calculating the amount of silane required to provide approximately one molecular layer of coverage of the particle surfaces of the filler based on a specific surface area measurement of the particle surfaces;
c) uniformly dispersing the required amount of silane over the filler;
d) allowing adequate time for the silane to react with particle surfaces of the filler; and
e) mixing the treated filler into the polymer resin.

2. The method according to Claim 1, wherein the silane is selected from a group consisting of epoxy and amino functional silanes.

3. The method according to Claim 1, wherein the organic polymer resin is a polyurethane resin.

4. The method according to Claim 1, wherein the silane is DOW CORNING Z-6040 dispersed in a low moisture content solvent.

5. The method according to Claim 1, the filler comprising any particulate matter that may be added to an organic polymer in order to enhance or modify resulting electrical properties of the filled material.

6. The method according to Claim 1, the organic polymer resin comprising one of epoxy, polysulfide, fluoroelastomer, polyester, polyurea, polythioether, vinyl ester or polyaspartic.

7. The method according to Claim 1, the silane comprising an organofunctional silane having the formula of RnSi(OR)4-n,
wherein R is selected from a group consisting of alkyl, allyl and organofunctional, and
wherein OR is selected from a group consisting of methoxy, ethoxy and acetoxy, to promote adhesion between an inorganic surface and organic resin.
